# EUROPEAN PATENT APPLICATION

(11) **EP 2 251 187 A1**
(43) Date of publication of application: **17.11.2010**
(21) Application number: 09160414.0
(22) Date of filing: 15.05.2009
(51) Int. Cl.: B29C 70/74, B29C 44/32

(54) **Flexible protective sheet and its use**

(71) Applicant: Lantor B.V., 3901 RG Veenendaal (NL)
(72) Inventor: Kerstens, May Magdalena Maria, 3582 KP Utrecht (NL); Anjema, Pieter, 3904 HL Veenendaal (NL)
(74) Representative: Hatzmann, Martin

(57) **Abstract**

The invention is directed to a flexible protective sheet. In a first aspect, the invention provides a flexible protective sheet comprising a carrier and a foam-structure, wherein said foam-structure is composed of a plurality of expanded foam units attached to said carrier sheet.

## Description

The invention is directed to a flexible protective sheet and different uses thereof.

Expanded polystyrene (EPS) is well known for its protective properties. Because EPS can be made up of 98% air, it is one of the most light-weight packaging materials available. Furthermore, the foam structure offers extraordinary strength and exhibits high thermal efficiency and insulating properties. Disadvantage of EPS is that it requires to be molded in predetermined forms, such as sheets or complicated three dimensional structures covering the article to be protected. A further disadvantage of these forms is that they lack flexibility and thus may easily break.

Object of the present invention is to provide a protective sheet that is both flexible and light-weight, which protective sheet solves at least part of the above-mentioned problems of the prior art.

In a first aspect, this object is met by providing a flexible protective sheet comprising a carrier and a foam-structure, wherein said foam-structure is composed of a plurality of expanded foam units attached to said carrier.

The inventors surprisingly found that by forming a foam-structure of a plurality of expanded foam units, a flexible sheet can be obtained, while the protective properties of the foam-structure as a whole are maintained. The inventors further found that such a protective sheet could easily be prepared by expanding expandable foam units provided on a carrier. The protective sheets of the present invention can be produced at relatively low cost, in particular when the processes as described herein are used.

The protective sheet according to the invention may give protection, from *a.o.* shock, vibration, compression and temperature.

The protective sheet of the invention may for example be used as an insulating material for protection against temperature by reducing the rate of heat transfer (thermal insulation), or for protection against sound by absorbing sound (acoustic insulation). The protective sheets may for example be used in buildings to improve the energy efficiency in heating and cooling.

The protective sheet may also be used as a packaging material that provides the packaged product with protection from e.g. shock or impact during transport. The protective sheet of the invention may for example be used to cover damage-prone parts of electronic devices, such as the screen of a television. Other applications are for instance in shock absorption in floors and sporting grounds, e.g. as an underlayer for artificial turf or natural grass.

Because of its lightness and favorable compressibility and flexibility, the protective sheet may further be used in protective clothing and gear, such as for example shin-pads.

The protective sheet may also have an additional decorating purpose, wherein the foam units are shaped in certain figures, such as heart-shaped, star-shaped, etc.

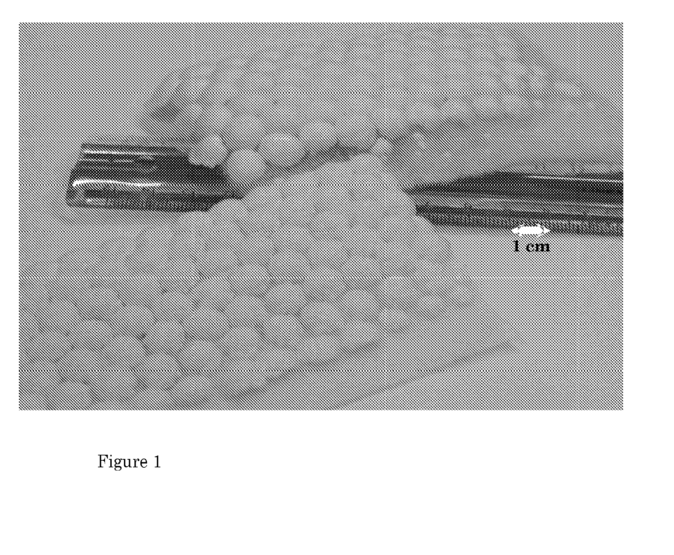

In figure 1 by way of example a sheet in accordance with the present invention is shown. The ruler that is depicted for scale has a measure in centimeters.

The carrier of the invention is used as a receiving medium wherein or whereupon the expanded foam units can be provided. The foam units are typically provided onto the carrier while still in unexpanded form, the carrier can be allowed to deform somewhat by the strains imposed by expansion of the foam units. The carrier can be of various origins, *e.g.* a woven material, a non-woven material or a scrim (mesh). When using a fibrous web as a carrier, the foam-structure is at least in part contained within the web. Furthermore, a scrim, such as a polyester of polypropylene scrim can be used. Commercially obtainable suitable polypropylene scrims are for instance CONWED™ R05340 PP having a mesh size of typically 6 x 6 mm. When using a scrim as a carrier, the scrim typically lies at least partly buried in the foam-structure.

Preferably, a fibrous web is used as the carrier. A fibrous web used in the invention will usually be a non-woven, which may be reinforced, based on conventional fibres. The manufacture of suitable non-wovens has for instance been described by Dr. Helmut Jörder, "Textilien auf Vliesbasis (Nonwovens)" (A.V.R.-Fachbuch, P. Keppler Verlag, 1977). Suitable non-wovens are for instance thermally bonded nonwovens, chemically bonded nonwovens, needle punched nonwovens and hydroentangled nonwovens, in which the fibres are entangled by means of a water jet. It is also possible to use a combination of a non-woven fibrous web with a reinforcing fabric, one within or on top of the other. The fibres of the web are preferably selected from the group of natural fibres, metal fibres or synthetic fibres, such as acrylic, polyethylene, polypropylene, polyester, polyamide (aramide), carbon or polypropylene fibres and combinations thereof. More preferably the fibres are selected from the group of polyester fibres, polyester-polyethylene bicomponent fibres and combinations thereof. Very good results have been achieved with polyester fibres. Polyester fibres have been found to have very good adherence with the binder and foam compound.

Preferably, at least one side of the carrier is covered by the foam-structure for at least 50%, more preferably at least 70% of the total surface area. In one embodiment, at least one side of the carrier is completely covered by the foam-structure, but the printed pattern remains visible: the (hexagonal) "islands" are separated from each other by "channels", thus providing flexibility to the sheet.

The foam-structure of the invention is composed of expanded foam units. These foam units provide the sheet of the invention with its protective nature. The expanded foam units may be porous and are preferably solid (as opposed to hollow). Preferably, the foam-structure is made of a closed-cell foam structure.

The foam units may be arranged in a certain pattern over the protective sheet. For example, the foam units may be distributed over the protective sheet in a regular pattern or in an irregular way. Preferably, the expanded foam units are arranged within or onto the carrier in a pattern in which each expanded foam unit forms an 'island' within or upon the carrier and in which the islands are separated from each other by gaps. Gaps are areas that are largely free of carrier material and also have very low content of foam materials, i.e. materials present in the foam, such as polymer and binder (see hereinbelow). As a rule the material content in the gaps should be low enough to allow for sufficient flexibility of the protective sheet. For example, the material content in the gaps should be less than 10%, preferably less than 5% of the average material content present in the foam units. The width of the gaps between two islands is preferably less than 50 mm, more preferably less than 10 mm, more preferably less than 5 mm.

The foam units are preferably distributed homogeneously onto the carrier, so that the protective sheet does not have any weak spots, i.e. regions in the sheet that provide considerably less protection than other regions.

Preferably at least the majority of the expanded foam units and more preferably substantially all expanded foam units have a diameter, as defined by the diameter of the enveloping circle, in the plane of the material of less than 50 mm, more preferably less than 25 mm, even more preferably less than 15 mm. Preferably, at least the majority of expanded foam units and more preferably substantially all expanded foam units have a diameter in the plane of the material of at least 1 mm, more preferably at least 3 mm, even more preferably at least 5 mm. It is generally not preferred to have expanded foam units having a diameter that exceeds 50 mm, because it is difficult to roll up such sheets. In a preferred embodiment of the present invention the entire process for producing the sheets of the present invention is a so called roll-to-roll process, in which a roll of nonwoven material is put through the entire process and ends up as a roll of final product. In this way sheets can be produced that are almost not limited in length. This is another important advantage compared to prior art protective materials, such as PS foam sheets, which typically have a limited length of at most several meters. Preferably the diameter of the cylinder on which the sheets of the present invention are rolled (*viz.* the starting diameter in the roll-to-roll process) is less than about 200 mm.

Very good results have been obtained with a protective sheet wherein at least the majority of the expanded foam units have a diameter of 7-13 mm. Herein, "substantially all" may refer to e.g. at least 99% or at least 99.9%. The enveloping circle may be defined as the smallest circle that a unit fits in. The enveloping circle is sometimes also called the circumscribed circle.

The expanded foam units can have any shape. Good results have been achieved with a protective sheet wherein at least the majority of the members are selected from the group consisting of members with circular, ellipsoidal and polygonal cross-sections parallel to the plane of the material. Of course combinations thereof may be employed. Preferred members with polygonal cross-sections are members with triangular, tetragonal, pentagonal, hexagonal, heptagonal or octagonal cross-sections.

The expanded foam units preferably comprise a polymer and air, the blowing agent being evaporated during the expansion step. Typically the polymer in the foam units originates from unexpanded polymeric materials, which in unexpanded form have the form of small particles, each of such particles having a typical diameter of 200-1000 µm. These small particles comprise the polymer, which is mixed with the blowing agent. Upon heating the blowing agent expands, resulting in a volume change of the small particles of several factors. The resulting particles may have a size of typically 1-4 mm and may comprise as much as 98% air, the remainder being matrix material, *viz.* mainly polymer. As used herein, the term "foam unit" thus refers to the printed pattern on the sheet, that may comprise as little as one, but usually a plurality of (expanded) polymeric particles. The unexpanded particles are commercially obtainable in various types and grades.

The polymer used may be any polymer that can suitably be expanded using a blowing agent and can provide the protective sheet with desirable compressibility and elasticity properties. The polymer is preferably chosen from the group consisting of polystyrene (PS), polypropylene (PP), polyethylene (PE), polylactic acid (PLA) or starch, in particular so-called foamable starch. Polystyrene foam units are particularly preferred for its desirable protective properties and also because of its favorable price. A commercially obtainable suitable foamable starch is PaperFoam^{™}.

The blowing agent, sometimes called a foaming agent, is a compound, which facilitates the transformation of a polymer into foam. The presence of this blowing agent is at least in part responsible for the expansion needed to obtain the expanded foam units of the invention. The blowing agent may be a chemical or physical blowing agent, such as hydrocarbon blowing agents, azodicarbonamide, freon and so forth. The blowing agent is preferably chosen from the group consisting of butane, pentane, isopentane, hexane, heptane and mixtures thereof. Pentane is most frequently used as a blowing agent for EPS.

The expanded foam units may further comprise a binder. A binder may help to keep the foam unit materials together and further to attach the foam units to the carrier. It may also provide the protective sheet with additional flexibility. Binder may for instance be chosen from thermoplastic binders (*viz.* non-curing binders), such as polyvinyl alcohol (PVA) or thermoplastic acrylates. Also biodegradable binders, such as starch, polylactic acid (PLA) and certain types of PVA can be used. Suitable binders are for instance lower alkyl acrylate polymer, styrene-butadiene rubber, acrylonitrile polymer, polyurethane, epoxy resins, polyvinyl chloride, polyvinylidene chloride, and copolymers of vinylidene chloride with other monomers, polyvinyl acetate, partially hydrolyzed polyvinyl acetate, polyvinyl alcohol, polyvinyl pyrrolidone, polyester resins, and so forth. Optionally these binders can be provided with acidic groups, for example by carboxylating the binders. A suitable carboxylating agent is, for example, maleic anhydride. Preferably, an acrylate binder is used.

The expanded foam units may further comprise a flame-retardant. Preferred flame-retardants are aluminum trihydrate (ATH), ammonium polyphosphate (APP), brominated cyclohydrocarbons, in particular a brominated cyclohydrocarbon flame-retardant chosen from the group consisting of hexabromocyclododecane, decabromodiphenyl ether and mixtures thereof.

The protective sheet of the invention may have excellent compressibility properties. To avoid the protective sheets from damaging the materials they are protecting, e.g. for applications where the protective sheet should resist and/or absorb shocks, the sheets of the invention has a compressive stress at 10% strain (measured according to DIN EN 826; the compressive stress at 10% strain is the pressure that is required to obtain a deformation of the material of 10%) of preferably more than 50 kPa, more preferably of more than 100 kPa. The compressive stress at 10% strain is generally less than 500 kPa for the materials of the present invention.

A protective sheet of the invention is flexible. Preferably it is flexible enough to allow for the roll-to-roll production process mentioned above. Flexibility is defined herein as the ability of the protective sheet to conform to a contoured surface. In particular a protective sheet as defined has a preferred flexibility if it can be bent around a corner with a radius of 10 mm or less, without substantial irreversible deformation of the protective sheet. This allows the material to be draped in a good way around any object that needs protection. It is to be noted that the sheets of the present invention are a very versatile material and the flexibility may therefore vary accordingly, depending on the envisaged application.

The thickness of the protective sheet can be varied within wide ranges, e.g. between 0.5 and 10 mm, although thicker or thinner sheets can be made in accordance with the invention.

In another aspect, the invention is directed to a method for preparing the protective sheets of the first aspect comprising the steps of:
- providing a carrier; and
- applying within or onto said carrier a pattern of unexpanded foam units, which unexpanded foam units comprises a polymer and a blowing agent, thus obtaining a foam units containing carrier; and
- heating the foam units containing carrier, thereby expanding the unexpanded foam units.

The heating step to expand the foam units is preferably carried out using a heat press, or by irradiating with infrared radiation, or by heating with steam or by combinations thereof.

The unexpanded foam units comprise a polymer and a blowing agent. The presence of the blowing agent is responsible for an expansion of the foam units in the heating step. The foam units are applied onto or within the carrier in unexpanded form, for example by means of a paste, such as a foam paste.

The unexpanded foam units are preferably applied onto or within the carrier by printing, preferably using a screen printer. This has the advantage that the pattern and the shape of the foam units can be easily and accurately controlled. Very good results have been obtained using a rotary screen printer.

The unexpanded foam units may be printed with a polymer dispersion comprising a polymer, a blowing agent and water. Such a polymer dispersion typically is a slurry, in particular a paste. The slurry has to have a certain viscosity to make the polymer dispersion suitable for rotary screen printing. Preferably, the slurry has a viscosity of 3 000-20 000 mPa ·s (measured with a Brookfied DV-1 Prime with spindle S64 (SV spindle set) at 10 rpm and a temperature of 20 °C) or 1 000-7 000 mPa ·s (measured with a Brookfied DV-1 Prime with spindle S64 (SV spindle set) at 100 rpm and a temperature of 20 °C).

One preferable way of preparing a polymer dispersion suitable for screen printing is by dispersing the polymer containing blowing agent in a binder composition comprising a binder. A binder is a compound, typically a polymer, assists in keeping together the different compounds in a mixture through adhesion and cohesion. The binder composition may further comprise surfactants, foam stabilizers, fillers and/or thickeners. Other additives may be present in the binder to improve its general properties, such as UV stabilizers, hydrophobicity modifiers, hydrophilicity modifiers, chemical resistance enhancers and the like. The binder composition is typically a paste-like composition and may help in holding the ingredients in the polymer dispersion together. In addition, after printing, the binder composition functions as glue between the polymer particles in the dispersion and the carrier.

Preferably, the polymer dispersion comprises 30 - 80 wt.% polymer, more preferably 60-75 wt.%, and 1 - 60 wt.% binder, more preferably 2-20 wt.%, and the rest water based on the total weight of the polymer dispersion.

Once the unexpanded foam units are applied onto or within the carrier, the resulting foam units containing carrier may be dried, for example in a convection oven. Drying may be conducted at a temperature of preferably 40-90 °C, more preferably 50-70 °C.

Subsequently, the foam units containing carrier may be heated (in the same or in a separate step) to cause the unexpanded foam units to expand. Expansion will take place at the activation or initial expansion temperature. Furthermore, if a binder is present in the unexpanded foam units, the binder may be cured or dried by heating in this step.

Thus, in one aspect the unexpanded foam units are first dried, typically at a temperature of 50-70 °C and subsequently expanded in a separate step, typically at a temperature of 90-130 °C.

In a special embodiment of the invention, only one single heating step may be used for both drying and expansion to take place, typically at a temperature of around 70-130 °C, preferably about 75-115 °C. It was found that although such a combined heating step decreases the expandability, nevertheless a sufficient expandability was achieved for the protective sheet of the invention. A combined heating step is desirable, because it considerably simplifies the process.

The heating step may be conducted using a convection oven, by IR irradiation, by steam, by a heat press or a combination of those. Preferably, heating is conducted by contacting the foam units containing carrier with a hot surface, e.g. by using a heat press or a static press. It was found that heat transfer in this way would result in a very good and more homogeneous expansion of the foam units. Particular good results were achieved using a Fontijne press.

It was found that when using too high a temperature, e.g. a temperature higher than 125 °C, would result in a smaller expansion. Preferably, the heating step is conducted at a temperature of 80 - 125 °C, more preferably at a temperature of 90 - 115 °C.

The unexpanded foam units are preferably expanded up to 100%. The degree of expansion of the unexpanded foam units is determined by the duration of the heating step.

An example of a suitable expandable polymer particles that may be used in the invention is Styropor^{™}, for instance Styropor^{™} F415-N, obtainable from BASF.

The present invention will be further illustrated by the following non-limiting example.

### Example

A needle punched nonwoven sheet of 100% polyester having a specific weight of 135 g/m² was printed using a rotary screen printing device with a slurry of the following composition: 81 wt.% Styropor^{™} F415-N (a PS composition obtained from BASF), 18 wt.% acrylate binder and about 1 wt.% acrylate thickener/ammonia (weight percentages based on dry weight).

The slurry was printed in a regular hexagonal pattern of dots having a mutual distance (centre-to-centre distance) of about 10 mm. Each dot had a diameter of about 7 mm. The holes in the screen had a diameter of 7 mm.

The sheet with the pattern printed thereon was then pre-dried at 60 °C, which is below the expansion temperature of PS.

Next the printed sheet was fed to a press heater (Fontijne^{™}), which was adjusted to a slit of 4 mm. The printed sheet was heated to about 115 °C, which resulted in expansion of the polymeric material.

A sheet was obtained in which the foam structure had a hexagonal shape, similar to that of the materials depicted in figure 1.

The sheet was flexible and had excellent protective properties.

## Claims

1. Flexible protective sheet comprising a carrier and a foam-structure, wherein said foam-structure comprises a plurality of expanded foam units attached to said carrier sheet.

2. Flexible protective sheet according to claim 1, wherein said expanded foam units comprise an expanded polymer.

3. Flexible protective sheet according to claim 2, wherein said polymer is chosen from the group consisting of polystyrene, polyethylene, polypropylene and polylactic acid, preferably polystyrene.

4. Flexible protective sheet according to any of the previous claims, wherein said expanded foam units further comprise a binder, preferably an acrylate binder.

5. Flexible protective sheet according to any of the previous claims, wherein said expanded foam units further comprise a flame-retardant, preferably aluminum trihydrate (ATH), ammonium polyphosphate (APP) or a brominated cyclohydrocarbon, more preferably a compound chosen from the group of hexabromocyclododecane, decabromodiphenyl ether and mixtures thereof.

6. Flexible protective sheet according to any of the previous claims, wherein at least 70% of the carrier is covered with foam units.

7. Flexible protective sheet according to any of the previous claims, wherein said carrier is a textile, preferably a nonwoven.

8. Flexible protective sheet according to any of the previous claims, wherein the units have an average diameter - as defined by the diameter of the circumscribed circle, in the plane of the material - of 1 - 50 mm, preferably 5 - 25 mm.

9. Flexible protective sheet according to any of the previous claims, wherein units adjacent to each other are connected.

10. Flexible protective sheet according to any of the previous claims, having a compressive stress at 10% strain (measured according to DIN EN 826) of more than 50 kPa, preferably of more than 100 kPa and preferably less than 500 kPa.

11. Flexible protective sheet according to any of the previous claims, wherein said foam units are closed-cell foam units.

12. Method for producing protective material according to any of the previous claims, comprising the steps of:
- providing a carrier; and
- applying within or onto said carrier a pattern of unexpanded foam units, which unexpanded foam units comprise a polymer with a blowing agent, thus obtaining a foam units containing carrier; and
- heating the foam units containing carrier, thereby expanding the unexpanded foam units.

13. Method according to claim 12, wherein said heating of the foam units is carried out using a heat press, infrared irradiation, steam or a combination thereof.

14. Method according to claim 12 or 13, wherein said blowing agent is a hydrocarbon blowing agent, preferably chosen from the group consisting of butane, pentane, isopentane, hexane, heptane and mixtures thereof.

15. Use of a sheet according to claim 1-11, or obtainable by the method of claim 12- 15 for thermal insulation, for acoustic insulation, for shock absorption, or combinations thereof.
